# EUROPEAN PATENT SPECIFICATION

(11) **EP 3 138 019 B1**
(45) Date of publication and mention of the grant of the patent: **20.05.2020**
(21) Application number: 14890915.3
(22) Date of filing: 30.04.2014
(51) Int. Cl.: G06F 11/36

(54) **VALIDATING ANALYTICS RESULTS**
VALIDIERUNG VON ANALYTIKERGEBNISSEN
VALIDATION DE RÉSULTATS D'ANALYSE

(43) Date of publication of application: 08.03.2017
(73) Proprietor: Pivotal Software, Inc., Palo Alto CA 94903 (US)
(72) Inventor: ZHU, Lei, Beijing 102627 (CN); FU, Ning, Beijing 100085 (CN); LI, Xiong, Beijing 100085 (CN); ZHAO, Yanhui, Beijing 100000 (CN); WANG, Xiaojian, Beijing 100123 (CN)
(74) Representative: Appleyard Lees IP LLP
(86) International application number: PCT/CN2014/076677
(87) International publication number: WO 2015/165112

(56) References cited:
- WO-A1-02/103292
- CN-A- 1 269 897
- CN-A- 102 915 373
- CN-A- 103 312 513
- DE-A1- 3 621 106
- FR-A1- 2 893 431
- GB-A- 2 270 399
- US-A1- 2005 204 194
- US-A1- 2013 124 529
- FRANK PADBERG ET AL: "An Experimentation Platform for the Automatic Parallelization of R Programs", SOFTWARE ENGINEERING CONFERENCE (APSEC), 2012 19TH ASIA-PACIFIC, IEEE, 4 December 2012 (2012-12-04), pages 203-212, XP032332306, DOI: 10.1109/APSEC.2012.70 ISBN: 978-1-4673-4930-7
- UNKNOWN ET AL: "WoTKit : a lightweight toolkit for the web of things", PROCEEDINGS OF THE THIRD INTERNATIONAL WORKSHOP ON THE WEB OF THINGS, WOT '12, 1 January 2012 (2012-01-01), pages 1-6, XP055432683, New York, New York, USA DOI: 10.1145/2379756.2379759 ISBN: 978-1-4503-1603-3

## Description

### BACKGROUND

This specification relates to cloud computing.

In cloud computing, data can be distributed to a system of multiple computers connected by one or more communications networks. Each computer can host one or more servers, each of which processes a portion of data. The servers can process the data in parallel. Such a distributed system can handle web-oriented and data-intensive applications deployed in a virtualized environment. Cloud computing systems can be used to perform big data analytics processes. Big data analytics processes can include examining large amounts of data of a variety of types to determine patterns, correlations, and other types of information. The data can be gathered from a variety of sources, e.g., web server logs, clickstream data, financial data, social media activity reports, and structured databases. Patent application GB2270399 discloses distributed computing system suitable for executing big data analytics processes.

### SUMMARY

The invention is defined by the independent claims. Further aspects of the invention are outlined in the dependent claims. Embodiments relate only to claimed combinations of features. In the following, if the term "embodiment" relates to unclaimed combinations of features, said term has to be understood as referring to non-claimed matter considered to be useful for highlighting specific aspects of the claimed subject-matter.

This specification describes a validation engine for an analytics system executing on a distributed computing system. The validation engine processes a subset of a dataset and polls the analytics system for a corresponding output subset and compares the two subsets to validate the analytics system. This is useful to validate an analytics system without having to validate an entire output set from the analytics system. For example, an organization that is beginning to use a new analytics system or is providing a new type of data to an analytics system can use the validation engine.

In general, one innovative aspect of the subject matter described in this specification can be embodied in methods that include the actions of receiving a request for validation of an analytics process configured to execute on a distributed computing system comprising a plurality of physical computers; receiving a raw subset of a dataset; processing the raw subset of the dataset to generate a first output subset, including executing a test script specifying an expression of the analytics process and supplying the raw subset as an input to the test script; receiving, from the distributed computing system that is executing the analytics process on the dataset, a second output subset that is a portion of an output of the analytics process executing on the distributed computing system, the second output subset resulting from the distributed computing system processing the raw subset; comparing the first output subset to the second output subset; and outputting, prior to the distributed computing system completing execution of the analytics process on the whole dataset, a validation result based on comparing the first output subset to the second output subset. Other embodiments of this aspect include corresponding computer systems, apparatus, and computer programs recorded on one or more computer storage devices, each configured to perform the actions of the methods. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

The foregoing and other embodiments can each optionally include one or more of the following features, alone or in combination. The test script is written in the R programming language. Receiving the second output subset comprises polling the analytics system using an asynchronous callback function implemented using a RESTful API, the method comprising polling the analytics system in parallel with processing the raw subset. The first output subset comprises a first plurality of data elements and the second output subset comprises a second plurality of data elements, and wherein comparing the first output subset to the second output subset comprises comparing each data element in the first plurality of elements to a corresponding data element in the second plurality of data elements. The actions include determining a number of elements in the first plurality of elements that are about equal to a corresponding element in the second plurality of elements, wherein outputting the validation result comprises outputting a positive validation result if the number of elements is above or equal to a threshold and outputting a negative validation result if the number of elements is below the threshold. Receiving the raw subset comprises receiving the raw subset from a customer computer system, wherein the customer computer system provides the dataset to the analytics system and the analytics system provides the output to the customer computer system; and outputting the validation result comprises outputting the validation result to the customer computer system. The test script specifies a process for requesting, from the analytics system, the portion of the output of the analytics system resulting from the analytics system processing the raw subset. The process for requesting the portion of the output of the analytics system resulting from the analytics system processing the raw subset comprises an API call to the analytics system for requesting the second output subset by specifying data characterizing the raw subset

Particular embodiments of the subject matter described in this specification can be implemented to realize one or more advantages. A validation engine can output a validation result for an analytics system executing on a distributed computing system. The validation engine can produce the validation result in less time than it takes to validate an entire dataset. The validation engine is used with various analytics systems, e.g., any analytics system that can provide a RESTful (REpresentational State Transfer) API (Application Programming Interface).

The details of one or more embodiments of the subject matter described in this specification are set forth in the accompanying drawings and the description below. Other features, aspects, and advantages of the subject matter will become apparent from the description, the drawings, and the claims.

### BRIEF DESCRIPTIONS OF DRAWINGS

FIG. 1 is a block diagram of an example computing system.
FIG. 2 is a block diagram of an example validation engine.
FIG. 3 is a flow chart of an example process performed by the validation engine of FIG. 2.
FIG. 4 is a flow chart of an example process performed by the comparator and threshold tester of FIG. 2.

Like reference numbers and designations in the various drawings indicate like elements.

### DETAILED DESCRIPTION

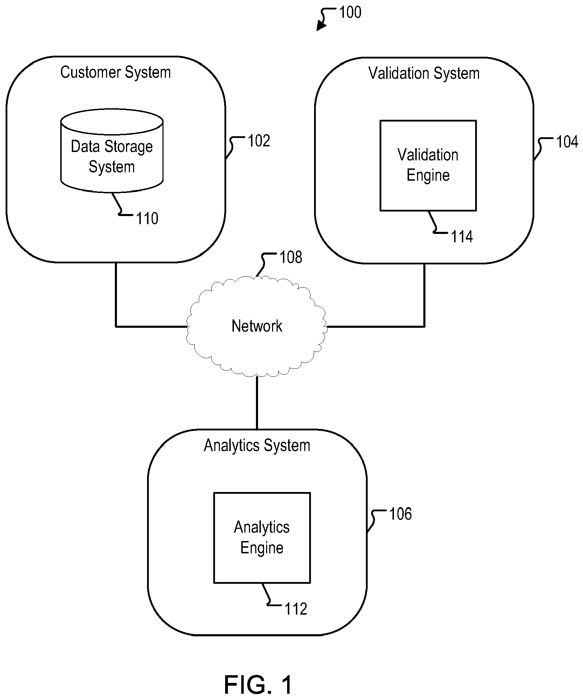

FIG. 1 is a block diagram of an example computing system 100. The system includes a customer system 102, a validation system 104, and an analytics system 106 connected by a data communications network 108. Each of the systems can include one or more computers connected by one or more communications networks. Each computer can be implemented as a physical computer or as software running on a virtual machine of a physical computer.

The customer system stores a dataset on a data storage system 110. The data storage system can be a distributed file system, which can include non-volatile mass storage memory, e.g., flash or disk memory. The dataset can be a file, a collection of files, a database, or a collection of data organized in any other fashion. The dataset can include various types of data collected from various sources. For example, the dataset can include web server logs, data reported by social networking systems, banking transactional data, healthcare data, sports statistics, and so on. The dataset can be stored in any appropriate data storage structure, e.g., a relational database or a dedicated XML store or the like.

The customer system uses the analytics system to perform an analytics process on the dataset using an analytics engine 112 executed by the analytics system. In some implementations, the customer system and the analytics system are both part of the same distributed computing system. The customer system transmits the dataset to the analytics system, e.g., by making the dataset available to the analytics system over the network so that the analytics system can request data as needed by the analytics process.

The analytics process can be any of various types of analytics processes, e.g., searching for patterns, determining correlations between subsets of the dataset, and calculating statistics characterizing the dataset. The analytics system typically performs the analytics process using a parallel, distributed process, e.g., by using MapReduce implemented using Apache Hadoop. The result of the analytics process is an analytics output, which can be, e.g., another dataset or one or more charts or other data visualizations or the like.

The customer system uses the validation system to validate the analytics process using a validation engine 114. The validation engine processes a subset of the dataset and polls the analytics engine for a corresponding output subset and compares the two subsets to validate the analytics engine. This is useful, e.g., to validate an analytics engine without having to validate an entire output set from the analytics engine, or to validate an analytics engine in less time than it takes the analytics engine to produce an entire output set.

The validation engine can receive the subset of the dataset from the customer system. The validation engine processes the subset using the same process as the analytics engine, or a process that produces the same result. For example, the validation engine may execute the process in a single computing system, eliminating the need for the overhead associated with the parallel, distributed process used by the analytics engine.

The validation engine receives the output subset from the analytics system. In some implementations, the validation engine polls the analytics system using an asynchronous callback function implemented using a RESTful API. The system can poll the analytics system in parallel with processing the subset of the dataset received from the customer system.

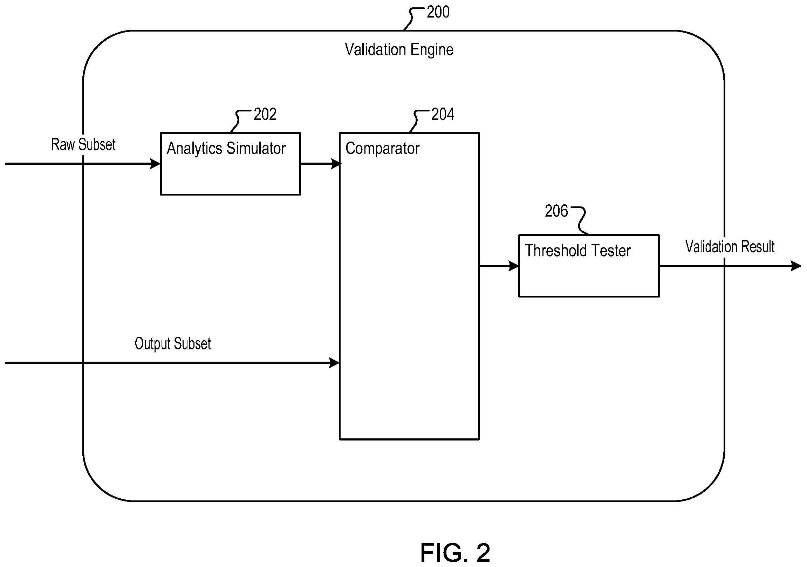

FIG. 2 is a block diagram of an example validation engine 200. The validation engine can be used in the validation system 104 of FIG. 1.

The validation engine receives a raw subset of a dataset from a customer system, e.g., the customer system 102 of FIG. 1. The raw subset is some portion of the dataset that has not been processed. The validation engine also receives an output subset from an analytics system, e.g., the analytics system 106 of FIG. 1. The output subset is a portion of an output of the analytics system, resulting from the analytics system processing the whole dataset according to an analytics process.

The output subset corresponds to the same portion of the dataset as the raw subset because the output subset is the result of the analytics system processing the raw subset. For example, if the raw subset is a number of columns from a table, then the output subset is the analytics output resulting from processing those columns using the analytics process.

In some implementations, the operation of the validation engine depends on an assumption that the contents of the output subset depend only on the raw subset and not on the entire dataset or some portion of the dataset that is greater than the raw subset. For example, if the analytics system is computing cumulative statistics, then the output subset may depend on the entire dataset, and the validation engine may not be able to validate the analytics system using solely the raw subset of the dataset.

In some implementations, the validation engine can update the raw subset if the analytics system makes any changes to the raw subset as part of performing the analytics process. For example, the validation engine can set a trigger with the analytics system when it receives the raw subset, so that the trigger causes the analytics system to supply an updated raw subset to the validation engine if the analytics system changes the raw subset. The validation engine can set the trigger using an API for the analytics system. In another example, the validation engine can periodically poll the analytics system to request any updates to the raw subset.

After receiving an updated raw subset from the analytics system, the validation engine can repeat the validation process using the updated raw subset to validate the analytics system. Although this may delay a final validation output from the validation engine, the validation process can still be useful to identify issues before the analytics system processes the entire dataset.

The validation engine includes an analytics simulator 202 that performs the analytics process using the raw subset. The analytics simulator can use a test script that specifies the analytics process. The analytics simulator can receive the test script from, e.g., a customer system or an analytics system. The test script can be a script written in the R programming language, in which case the analytics simulator can execute the test script using the raw subset as an input to the test script.

In some implementations, the test script also specifies which portion of the dataset the validation engine will use as the raw subset and how to request the corresponding output subset from the analytics system. For example, the test script can specify an API call to the analytics system for requesting the output subset by specifying data characterizing the raw subset. Pivotal Analytics service in Pivotal One provides some APIs which can enhance the functions of the R language.

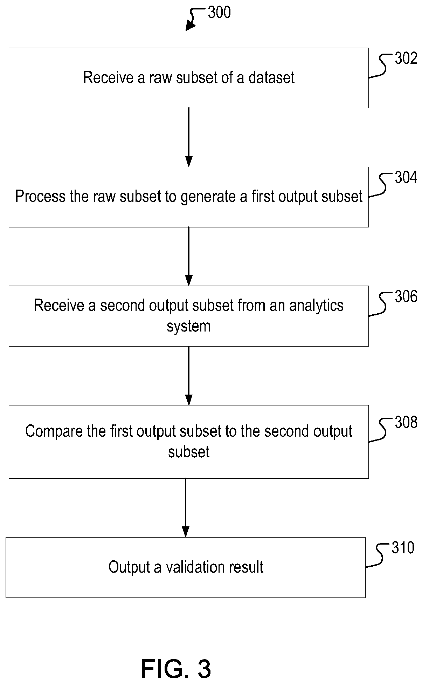

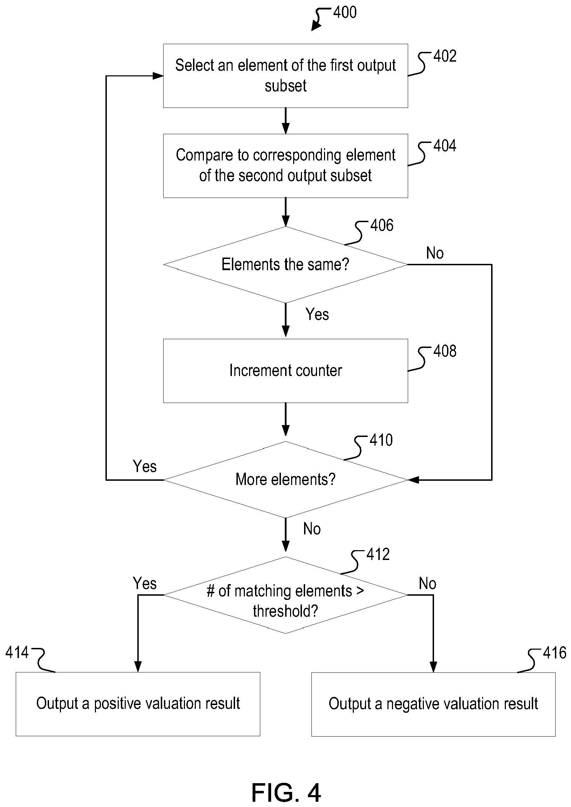

The validation engine includes a comparator 204 that compares the output subset from the analytics system with the output of the analytics simulator. For example, the comparator can examine individual data points within the subsets and determine whether they are equal or different by less than a threshold. In some cases, the output subset from the analytics system and the output of the analytics simulator may be in different data formats, e.g., one may be in a JSON format and the other may be in a CSV format, or one may be in a JSON format and the other may be in an XML format. The comparator can convert one or both of the subsets into a common format, or the comparator can translate between the different formats on-the-fly while performing the comparison. Comparing data points is discussed further below with reference to FIGS. 3 and 4.

The validation engine includes a threshold tester 206 that determines whether the comparison of the output subset is sufficient to indicate a positive validation result. The threshold tester produces a validation result that is either positive or negative depending on the result of the comparison. For example, if the output subset differs from the output of the analytics simulator only in a number of data elements, and the number of data elements in less than a threshold, the threshold tester can output a positive validation result.

The customer system can use the validation result to validate the analytics system. If the validation result is negative, this can indicate that the analytics system may not be installed properly or executing properly, before the analytics system completes the analytics process on the entire data set, which may be a time consuming and costly operation.

FIG. 3 is a flow chart of an example process 300 performed by the validation engine 200 of FIG. 2. The validation engine receives a raw subset of a dataset (302). The validation engine processes the raw subset to generate a first output subset (304). The validation engine receives a second output subset from an analytics system that is processing the dataset (306). The second output subset corresponds in the dataset to the raw subset. The validation engine compares the first output subset to the second output subset (308). The validation engine outputs a validation result based on comparing the first output subset to the second output subset (310).

FIG. 4 is a flow chart of an example process 400 performed by the comparator 204 and threshold tester 206 of FIG. 2. The comparator selects an element of the first output subset (402). The comparator compares the selected element to the corresponding element of the second output subset (404). The corresponding element is, e.g., at the same row and column in a table, or nested to the same location in a hierarchical data structure. If the elements are the same (406) or different by only a threshold amount, then the comparator increments a counter (408). If there are more elements (410) the comparator repeats the process for the remaining elements or a certain number of elements.

The threshold tester determines the difference between the incremented counter and the total number of elements in each output subset. If the difference is greater than a threshold (412), the threshold tester outputs a positive validation result (414). Otherwise, the threshold tester outputs a negative validation result (416). This can be useful for very big data processes that cannot guarantee 100% accuracy of outputs.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory program carrier for execution by, or to control the operation of, data processing apparatus. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus. The computer storage medium can be a machine-readable storage device, a machine-readable storage substrate, a random or serial access memory device, or a combination of one or more of them.

The term "data processing apparatus" refers to data processing hardware and encompasses all kinds of apparatus, devices, and machines for processing data, including by way of example a programmable processor, a computer, or multiple processors or computers. The apparatus can also be or further include special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, a module, a software module, a script, or code, can be written in any form of programming language, including compiled or interpreted languages, or declarative or procedural languages, and it can be deployed in any form, including as a stand-alone program or as a module, component, subroutine, or other unit suitable for use in a computing environment. A computer program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a communication network.

The processes and logic flows described in this specification can be performed by one or more programmable computers executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application-specific integrated circuit).

Computers suitable for the execution of a computer program include, by way of example, can be based on general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

The computing system can include clients and servers. A client and server are generally remote from each other and typically interact through a communication network. The relationship of client and server arises by virtue of computer programs running on the respective computers and having a client-server relationship to each other.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. For example, the subject matter is described in context of scientific papers. The subject matter can apply to other indexed work that adds depth aspect to a search. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing can be advantageous.

## Claims

1. A method performed by one or more computers, the method comprising:
receiving a request for validation of an analytics process configured to execute on a distributed computing system comprising a plurality of physical computers;
receiving a raw subset of a dataset (302);
processing the raw subset of the dataset to generate a first output subset (304), including executing a test script specifying an expression of the analytics process and supplying the raw subset as an input to the test script;
receiving, from the distributed computing system that is executing the analytics process on the dataset, a second output subset that is a portion of an output of the analytics process executing on the distributed computing system (306), the second output subset resulting from the distributed computing system processing the raw subset, and wherein receiving the second output subset comprises polling the distributed computing system that is executing the analytics process on the dataset using an asynchronous callback function implemented using a representational state transfer application program interface, further referred to as RESTful API, comprising polling the distributed computing system that is executing the analytics process on the dataset in parallel with processing the raw subset;
comparing the first output subset to the second output subset (308); and
outputting, prior to the distributed computing system completing execution of the analytics process on the whole dataset, a validation result based on comparing the first output subset to the second output subset (310).

2. The method of claim 1, wherein the test script is written in the R programming language.

3. The method of any of claims 1-2, wherein the first output subset comprises a first plurality of data elements and the second output subset comprises a second plurality of data elements, and wherein comparing the first output subset to the second output subset comprises comparing each data element in the first plurality of elements to a corresponding data element in the second plurality of data elements.

4. The method of claim 3, comprising determining a number of elements in the first plurality of elements that are about equal to a corresponding element in the second plurality of elements, wherein outputting the validation result comprises outputting a positive validation result if the number of elements is above or equal to a threshold and outputting a negative validation result if the number of elements is below the threshold.

5. The method of any of the claims 1-4, wherein:
receiving the raw subset comprises receiving the raw subset from a customer computer system, wherein the customer computer system provides the dataset to an analytics system comprising the distributed computing system that is executing the analytics process on the dataset and the analytics system provides the output to the customer computer system; and
outputting the validation result comprises outputting the validation result to the customer computer system.

6. The method of any of the claims 1-5, wherein the test script specifies a process for requesting, from the analytics system, the portion of the output of the analytics system resulting from the analytics system processing the raw subset.

7. The method of claim 6, wherein the process for requesting the portion of the output of the analytics system resulting from the analytics system processing the raw subset comprises an API call to the analytics system for requesting the second output subset by specifying data characterizing the raw subset.

8. The method of claim 1, further comprising:
updating the raw subset in response to changes made to the raw subset as part of the distributed computing system processing the raw subset; and
repeating the validation process using the updated raw subset, comprising:
processing the updated raw subset to generate a third output subset, including executing a test script specifying an expression of the analytics process and supplying the updated raw subset as an input to the test script;
receiving, from the distributed computing system that is executing the analytics process on the dataset, a fourth output subset that is a portion of an output of the analytics process executing on the distributed computing system, the fourth output subset resulting from the distributed computing system processing the updated raw subset;
comparing the third output subset to the fourth output subset; and
outputting, prior to the distributed computing system completing execution of the analytics process on the whole dataset, a validation result based on comparing the third output subset to the fourth output subset.

9. The method of claim 8, wherein updating the raw subset in response to changes made to the raw subset as part of the distributed computing system processing the raw subset comprises:
setting a trigger with the distributed computing system that is executing the analytics process on the dataset that causes the distributed computing system that is executing the analytics process on the dataset to supply an updated raw subset if the distributed computing system that is executing the analytics process on the dataset changes the raw subset.

10. The method of claim 8, wherein updating the raw subset in response to changes made to the raw subset as part of the distributed computing system processing the raw subset comprises:
periodically polling the distributed computing system that is executing the analytics process on the dataset to request any updates to the raw subset.

11. A system comprising one or more physical computers configured to perform operations according to the methods of any of claims 1-10.

12. A computer storage medium encoded with a computer program, the program comprising instructions that when executed by a distributed computing system of a plurality of physical computers causes the distributed computing system to perform operations according to the methods of any of claims 1-10.

## Patentansprüche

1. Verfahren, das durch einen oder mehrere Computer durchgeführt wird, wobei das Verfahren Folgendes umfasst:
Empfangen einer Anforderung einer Validierung eines Analyseprozesses, der zur Ausführung in einem verteilten Computersystem, das eine Vielzahl physischer Computer umfasst, konfiguriert ist;
Empfangen einer Rohteilmenge einer Datenmenge (302);
Verarbeiten der Rohteilmenge der Datenmenge, um eine erste Ausgabeteilmenge (304) zu generieren, enthaltend Ausführen eines Testskripts, das einen Ausdruck des Analyseprozesses vorgibt, und Zuführen der Rohteilmenge als eine Eingabe in das Testskript;
Empfangen einer zweiten Ausgabeteilmenge, die ein Teil einer Ausgabe des Analyseprozesses, der im verteilten Computersystem (306) ausgeführt wird, ist, aus dem verteilten Computersystem, das den Analyseprozess an der Datenmenge ausführt, wobei sich die zweite Ausgabeteilmenge aus der Verarbeitung der Rohteilmenge durch das verteilte Computersystem ergibt und wobei das Empfangen der zweiten Ausgabeteilmenge Abfragen des verteilten Computersystems, das den Analyseprozess an der Datenmenge ausführt, unter Nutzung einer Asynchronous-Callback-Funktion, die unter Nutzung eines Representational State Transfer Application Program Interface, auch als RESTful API bezeichnet, implementiert wird, umfasst, umfassend Abfragen des verteilten Computersystems, das den Analyseprozess an der Datenmenge ausführt, parallel zur Verarbeitung der Rohteilmenge;
Vergleichen der ersten Ausgabeteilmenge mit der zweiten Ausgabeteilmenge (308); und,
bevor das verteilte Computersystem die Ausführung des Analyseprozesses an der ganzen Datenmenge beendet, Ausgeben eines Validierungsergebnisses basierend auf dem Vergleichen der ersten Ausgabeteilmenge mit der zweiten Ausgabeteilmenge (310).

2. Verfahren gemäß Anspruch 1, wobei das Testskript in der Programmiersprache R geschrieben ist.

3. Verfahren gemäß einem der Ansprüche 1-2, wobei die erste Ausgabeteilmenge eine erste Vielzahl von Datenelementen umfasst und die zweite Ausgabeteilmenge eine zweite Vielzahl von Datenelementen umfasst und wobei das Vergleichen der ersten Ausgabeteilmenge mit der zweiten Ausgabeteilmenge Vergleichen jedes Datenelements in der ersten Vielzahl von Elementen mit einem korrespondierenden Datenelement in der zweiten Vielzahl von Datenelementen umfasst.

4. Verfahren gemäß Anspruch 3, umfassend Bestimmen einer Anzahl von Elementen in der ersten Vielzahl von Elementen, die ungefähr gleich einem korrespondierenden Element in der zweiten Vielzahl von Elementen ist, wobei das Ausgeben des Validierungsergebnisses Ausgeben eines positiven Validierungsergebnisses, wenn die Anzahl von Elementen größer als oder gleich einem Grenzwert ist, und Ausgeben eines negativen Validierungsergebnisses, wenn die Anzahl von Elementen kleiner als der Grenzwert ist, umfasst.

5. Verfahren gemäß einem der Ansprüche 1-4, wobei:
das Empfangen der Rohteilmenge Empfangen der Rohteilmenge aus einem Kundencomputersystem umfasst, wobei das Kundencomputersystem die Datenmenge für ein Analysesystem, das das verteilte Computersystem, das den Analyseprozess an der Datenmenge ausführt, umfasst, bereitstellt und das Analysesystem die Ausgabe für das Kundencomputersystem bereitstellt; und
das Ausgeben des Validierungsergebnisses Ausgeben des Validierungsergebnisses an das Kundencomputersystem umfasst.

6. Verfahren gemäß einem der Ansprüche 1-5, wobei das Testskript einen Prozess zum Anfordern des Teils der Ausgabe des Analysesystems, der sich aus der Verarbeitung der Rohteilmenge durch das Analysesystem ergibt, vom Analysesystem vorgibt.

7. Verfahren gemäß Anspruch 6, wobei der Prozess zum Anfordern des Teils der Ausgabe des Analysesystems, der sich aus der Verarbeitung der Rohteilmenge durch das Analysesystem ergibt, einen API-Call an das Analysesystem zum Anfordern der zweiten Ausgabeteilmenge durch Vorgeben von die Rohteilmenge kennzeichnenden Daten umfasst.

8. Verfahren gemäß Anspruch 1, ferner umfassend:
Aktualisieren der Rohteilmenge als Reaktion auf Änderungen, die im Rahmen der Verarbeitung der Rohteilmenge durch das verteilte Computersystem an der Rohteilmenge vorgenommen wurden; und
Wiederholen des Validierungsprozesses unter Nutzung der aktualisierten Rohteilmenge, umfassend:
Verarbeiten der aktualisierten Rohteilmenge, um eine dritte Ausgabeteilmenge zu generieren, enthaltend Ausführen eines Testskripts, das einen Ausdruck des Analyseprozesses vorgibt, und Zuführen der aktualisierten Rohteilmenge als eine Eingabe in das Testskript;
Empfangen einer vierten Ausgabeteilmenge, die ein Teil einer Ausgabe des Analyseprozesses, der im verteilten Computersystem ausgeführt wird, ist, aus dem verteilten Computersystem, das den Analyseprozess an der Datenmenge ausführt, wobei sich die vierte Ausgabeteilmenge aus der Verarbeitung der aktualisierten Rohteilmenge durch das verteilte Computersystem ergibt;
Vergleichen der dritten Ausgabeteilmenge mit der vierten Ausgabeteilmenge; und,
bevor das verteilte Computersystem die Ausführung des Analyseprozesses an der ganzen Datenmenge beendet, Ausgeben eines Validierungsergebnisses basierend auf dem Vergleichen der dritten Ausgabeteilmenge mit der vierten Ausgabeteilmenge.

9. Verfahren gemäß Anspruch 8, wobei das Aktualisieren der Rohteilmenge als Reaktion auf Änderungen, die im Rahmen der Verarbeitung der Rohteilmenge durch das verteilte Computersystem an der Rohteilmenge vorgenommen wurden, Folgendes umfasst:
Setzen eines Auslösers mit dem verteilten Computersystem, das den Analyseprozess an der Datenmenge ausführt, der bewirkt, dass das verteilte Computersystem, das den Analyseprozess an der Datenmenge ausführt, eine aktualisierte Rohteilmenge zuführt, wenn das verteilte Computersystem, das den Analyseprozess an der Datenmenge ausführt, die Rohteilmenge ändert.

10. Verfahren gemäß Anspruch 8, wobei das Aktualisieren der Rohteilmenge als Reaktion auf Änderungen, die im Rahmen der Verarbeitung der Rohteilmenge durch das verteilte Computersystem an der Rohteilmenge vorgenommen wurden, Folgendes umfasst:
periodisches Abfragen des verteilten Computersystems, das den Analyseprozess an der Datenmenge ausführt, um eventuelle Aktualisierungen der Rohteilmenge anzufordern.

11. System, umfassend einen oder mehrere physische Computer, konfiguriert, um Operationen nach den Verfahren gemäß einem der Ansprüche 1-10 durchzuführen.

12. Computerspeichermedium, das mit einem Computerprogramm codiert ist, wobei das Programm Anweisungen umfasst, die, wenn sie durch ein verteiltes Computersystem einer Vielzahl physischer Computer ausgeführt werden, bewirken, dass das verteilte Computersystem Operationen nach den Verfahren gemäß einem der Ansprüche 1-10 durchführt.

## Revendications

1. Procédé réalisé par un ou plusieurs ordinateurs, le procédé comprenant :
la réception d'une demande de validation d'un processus analytique configuré pour être exécuté sur un système informatique distribué comprenant une pluralité d'ordinateurs physiques ;
la réception d'un sous-ensemble brut d'un ensemble de données (302) ;
le traitement du sous-ensemble brut de l'ensemble de données pour générer un premier sous-ensemble de sortie (304), comportant l'exécution d'un script de test spécifiant une expression du processus analytique et fournissant le sous-ensemble brut comme entrée du script de test ;
la réception, en provenance du système informatique distribué qui exécute le processus analytique sur l'ensemble de données, d'un deuxième sous-ensemble de sortie qui est une partie d'une sortie du processus analytique exécuté sur le système informatique distribué (306), le deuxième sous-ensemble de sortie résultant du traitement du sous-ensemble brut par le système informatique distribué, et dans lequel la réception du deuxième sous-ensemble de sortie comprend l'interrogation du système informatique distribué qui exécute le processus analytique au sujet de l'ensemble de données en utilisant une fonction de rappel asynchrone mise en œuvre à l'aide d'une interface de programme d'application à transfert d'état de représentation, également appelée RESTful API, comprenant l'interrogation du système informatique distribué qui exécute le processus analytique sur l'ensemble de données en parallèle au traitement du sous-ensemble brut ;
la comparaison du premier sous-ensemble de sortie au deuxième sous-ensemble de sortie (308) ; et
la production en sortie, avant que le système informatique distribué achève l'exécution du processus analytique sur la totalité de l'ensemble de données, d'un résultat de validation sur la base de la comparaison du premier sous-ensemble de sortie au deuxième sous-ensemble de sortie (310).

2. Procédé selon la revendication 1, dans lequel le script de test est écrit dans le langage de programmation R.

3. Procédé selon l'une quelconque des revendications 1 et 2, dans lequel le premier sous-ensemble de sortie comprend une première pluralité d'éléments de données et le deuxième sous-ensemble de sortie comprend une deuxième pluralité d'éléments de données, et dans lequel la comparaison du premier sous-ensemble de sortie au deuxième sous-ensemble de sortie comprend la comparaison de chaque élément de données dans la première pluralité d'éléments à un élément de données correspondant dans la deuxième pluralité d'éléments de données.

4. Procédé selon la revendication 3, comprenant la détermination d'un nombre d'éléments dans la première pluralité d'éléments qui sont approximativement égaux à un élément correspondant dans la deuxième pluralité d'éléments, dans lequel la production en sortie du résultat de validation comprend la production en sortie d'un résultat de validation positif si le nombre d'éléments est supérieur ou égal à un seuil et la production en sortie d'un résultat de validation négatif si le nombre d'éléments est inférieur au seuil.

5. Procédé selon l'une quelconque des revendications 1 à 4, dans lequel :
la réception du sous-ensemble brut comprend la réception du sous-ensemble brut en provenance d'un système informatique client, le système informatique client fournissant l'ensemble de données à un système analytique comprenant le système informatique distribué qui exécute le processus analytique sur l'ensemble de données et le système analytique fournissant la sortie au système informatique client ; et
la production en sortie du résultat de validation comprend la production en sortie du résultat de validation à destination du système informatique client.

6. Procédé selon l'une quelconque des revendications 1 à 5, dans lequel le script de test spécifie un processus de demande, par le système analytique, de la partie de la sortie du système analytique résultant du traitement du sous-ensemble brut par le système analytique.

7. Procédé selon la revendication 6, dans lequel le processus de demande de la partie de la sortie du système analytique résultant du traitement du sous-ensemble brut par le système analytique comprend un appel par une API du système analytique pour demander le deuxième sous-ensemble de sortie en spécifiant des données caractérisant le sous-ensemble brut.

8. Procédé selon la revendication 1, comprenant en outre :
l'actualisation du sous-ensemble brut en réponse à des changements apportés au sous-ensemble brut dans le cadre du traitement du sous-ensemble brut par le système informatique distribué ; et
la répétition du processus de validation à l'aide du sous-ensemble brut actualisé, comprenant :
le traitement du sous-ensemble brut actualisé pour générer un troisième sous-ensemble de sortie, comportant l'exécution d'un script de test spécifiant une expression du processus analytique et la fourniture du sous-ensemble du traitement du sous-ensemble brut actualisé comme entrée du script de test ;
la réception, en provenance du système informatique distribué qui exécute le processus analytique sur l'ensemble de données, d'un quatrième sous-ensemble de sortie qui est une partie d'une sortie du processus analytique exécuté sur le système informatique distribué, le quatrième sous-ensemble de sortie résultant du traitement du sous-ensemble brut actualisé par le système informatique distribué ;
la comparaison du troisième sous-ensemble de sortie au quatrième sous-ensemble de sortie ; et
la production en sortie, avant que le système informatique distribué achève l'exécution du processus analytique sur la totalité de l'ensemble de données, d'un résultat de validation sur la base de la comparaison du troisième sous-ensemble de sortie au quatrième sous-ensemble de sortie.

9. Procédé selon la revendication 8, dans lequel l'actualisation du sous-ensemble brut en réponse à des changements apportés au sous-ensemble brut dans le cadre du traitement du sous-ensemble brut par le système informatique distribué comprend :
l'établissement d'un déclencheur avec le système informatique distribué qui exécute le processus analytique sur l'ensemble de données qui amène le système informatique distribué qui exécute le processus analytique sur l'ensemble de données à fournir un sous-ensemble brut actualisé si le système informatique distribué qui exécute le processus analytique sur l'ensemble de données change le sous-ensemble brut.

10. Procédé selon la revendication 8, dans lequel l'actualisation du sous-ensemble brut en réponse à des changements apportés au sous-ensemble brut dans le cadre du traitement du sous-ensemble brut par le système informatique distribué comprend :
l'interrogation périodique du système informatique distribué qui exécute le processus analytique sur l'ensemble de données pour demander des actualisations du sous-ensemble brut.

11. Système comprenant un ou plusieurs ordinateurs physiques configurés pour exécuter des opérations conformément aux procédés selon l'une quelconque des revendications 1 à 10.

12. Support de mémorisation d'ordinateur codé avec un programme informatique, le programme comprenant des instructions qui, à leur exécution par un système informatique distribué d'une pluralité d'ordinateurs physiques, amènent le système informatique distribué à exécuter des opérations conformément aux procédés selon l'une quelconque des revendications 1 à 10.
